# EUROPÄISCHE PATENTSCHRIFT

(11) **EP 1 102 688 B1**
(45) Veröffentlichungstag und Bekanntmachung des Hinweises auf die Patenterteilung: **05.04.2006**
(21) Anmeldenummer: 00943680.9
(22) Anmeldetag: 05.06.2000
(51) Int. Cl.: B60Q 1/48

(54) **VERFAHREN ZUR FAHRWEGVISUALISIERUNG UND VORRICHTUNG**
METHOD AND DEVICE FOR VISUALIZING A DRIVING PATH
PROCEDE ET DISPOSITIF POUR VISUALISER UNE VOIE DE CIRCULATION

(30) Priorität: 04.06.1999 DE 19925584
(43) Veröffentlichungstag der Anmeldung: 30.05.2001
(73) Patentinhaber: ROBERT BOSCH GMBH, 70442 Stuttgart (DE)
(72) Erfinder: HUERTGEN, Bernd, D-31079 Sibbesse (DE); POECHMUELLER, Werner, D-31139 Hildesheim (DE)
(86) Internationale Anmeldenummer: PCT/DE2000/001797
(87) Internationale Veröffentlichungsnummer: WO 2000/074976

(56) Entgegenhaltungen:
- DE-A- 19 843 564
- DE-A- 19 845 567
- DE-C- 4 336 288

## Beschreibung

### Stand der Technik

Die Erfindung geht aus von einem Verfahren zur Fahrwegvisualisierung nach der Gattung des Hauptanspruchs. Es ist aus der DE 43 36 288 (Oberbegriff von Anspruch 1) C1 bereits eine Einrichtung zur Überwachung des Rück- bzw. Frontraums eines einparkenden Kraftfahrzeugs bekannt, bei der insbesondere der Rückraum eines einparkenden Kraftfahrzeugs mit einer am hinteren Teil des Fahrzeugs angeordneten Kamera überwacht wird. Die Kamera ist über eine Verbindungsleitung mit einem Sicht- und Kontrollgerät im Einsehbereich des Fahrzeugführers verbunden, so daß dieser den Rückraum des Fahrzeugs beobachten kann. Der Bildschirm des Sicht- und Kontrollgerätes ist in Felder bzw. Quadranten unterteilt. Die Kamera stellt auf Hindernisse innerhalb des erfaßten Bildwinkels scharf. Der Fahrzeugführer kann nun unter Beobachtung des Sicht- und Kontrollgerätes den in dem Bildschirm angezeigten Hindernissen ausweichen.

### Vorteile der Erfindung

Das erfindungsgemäße Verfahren mit den Merkmalen des Hauptanspruchs hat demgegenüber den Vorteil, daß einem Fahrzeugführer angezeigt wird, welchen Fahrweg das von ihm gesteuerte Fahrzeug bei einem unveränderten Lenkwinkel einnehmen wird, in dem der bei einem unveränderten Lenkwinkel zu erwartende Fahrweg in das Bild des rückwärtigen Fahrraums eingeblendet wird. Liegen innerhalb des angezeigten Fahrweges keinerlei Hindernisse, so kann der Fahrer rückwärts fahren, ohne weitere Lenkbewegungen vornehmen zu müssen und ohne mit einem Hindernis zu kollidieren. Liegen Hindernisse innerhalb des angezeigten Fahrweges, so kann der Fahrer des Fahrzeugs den eingeschlagenen Lenkwinkel solange korrigieren, auch während er bereits langsam anfährt, bis sich der zu erwartende Fahrweg derartig verschoben hat, daß kein Hindernis mehr innerhalb des Fahrweges liegt. Gelingt es dem Fahrer nicht, auch bei einem maximalen Einschlag der Lenkung, daß sich alle Hindernisse außerhalb des angezeigten Fahrweges befinden, so wird es dem Fahrer nun im allgemeinen nicht möglich sein, daß Hindernis direkt zu umfahren. Das Fahrzeug befindet sich in einem zu ungünstigen Winkel zu nah vor dem Hindernis. Der Fahrer kann folglich den Abstand zu dem Hindernis vergrößern und einen neuen Versuch starten, das Hindernis zu umfahren. Der Fahrer kann also direkt entscheiden, ob der Lenkwinkel zur Umfahrung des Hindernisses korrigiert werden muß bzw. ob eine von ihm durchgeführte Korrektur ausreichend ist, das Hindernis zu umfahren. Er ist dabei nicht mehr auf seine subjektive Einschätzung des Fahrweges des Fahrzeugs angewiesen. Hierdurch kann einerseits Zeit eingespart werden, die für vergebliche Umfahrungsversuche aufgewendet wird, da der Fahrer die Lage des Fahrzeugs zu dem Hindernis falsch eingeschätzt hat. Andererseits können Unfälle vermieden werden, die der Fahrer durch eine falsche Einschätzung der Lage des Hindernisses zum Fahrzeug möglicherweise hervorruft.

Durch die in den Unteransprüchen aufgeführten Maßnahmen sind vorteilhafte Weiterbildungen des im Hauptanspruch angegebenen Verfahrens möglich. Besonders vorteilhaft ist es, den Lenkwinkel des Fahrzeuges aus dem eingeschlagenen Lenkwinkel der Fahrzeuglenkung zu ermitteln. Dies bietet gegenüber z.B. einer Ermittlung des Lenkwinkels aus dem Radstand den Vorteil, daß insbesondere bei Fahrzeugen mit einer Servolenkung eine elektronische Erfassung des Lenkwinkels zum Teil bereits erfolgt und somit vorhandene elektronische Komponenten mit genutzt werden können.

Weiterhin ist es vorteilhaft, daß außer bei einem bei unveränderten Lenkwinkel zu erwartenden Fahrweg auch der maximale Bereich angezeigt wird, in dem ein möglicher Fahrweg liegen kann. Dieser maximale Bereich wird durch den maximalen Einschlagswinkel der Lenkung nach links und rechts begrenzt. Der Fahrzeugführer kann aus der Anzeige des maximalen Bereichs direkt absehen, ob er mit einem maximalen Einschlag der Lenkung ein Hindernis umfahren kann, ohne diesen maximalen Einschlag erst selbst vorzunehmen. Somit kann der Fahrer des Fahrzeugs direkt entscheiden, ob ein Hindernis noch durch eine geeignete Wahl eines Lenkwinkels umfahren werden kann oder ob ein neuer Versuch aus größerem Abstand und mit einer Anfahrt unter einem günstigeren Winkel erfolgen muß.

Weiterhin ist es vorteilhaft, mit dem Teil des rückwärtigen Fahrraumes, der von einer Kamera erfaßt wird, auch zumindest einen Teil der Fahrzeugstoßstange, zu erfassen. Diese dient dem Fahrer als Anhaltspunkt, an welchem Ort sich sein Fahrzeug gegenüber angezeigten Hindernissen befindet, und erleichtert ihm somit zusätzlich die Orientierung.

Ferner ist es vorteilhaft, eine durch eine Kameraoptik verursachte Verzerrung des ermittelten Bildes durch eine Recheneinheit zu entzerren. Durch diese Entzerrung wird vermieden, daß der Fahrer durch eine Bildverzerrung, die insbesondere bei starken Weitwinkelobjektiven in dem Randbereich des Bildes auftritt, irritiert wird. Denn eine Verzerrung kann dazu führen, daß der Fahrer möglicherweise die Lage des Fahrzeugs zu angezeigten Hindernissen falsch einschätzt.

Weiterhin ist es vorteilhaft, daß ein Ausgangssignal der Kamera in Abhängigkeit von der Helligkeit, also von der Stärke der empfangenen Lichtsignale, über eine nichtlineare Kennlinie, insbesondere über eine logarithmische Kennlinie angesteuert wird. Dies bietet den Vorteil, daß die Kamera über einen weiten Helligkeitsbereich einsetzbar ist und somit das erfindungsgemäße Verfahren auch bei sehr dunklen bzw. bei sehr hellen Lichtverhältnissen eingesetzt werden kann.

Es ist außerdem vorteilhaft, die Anzeige des Bildes des rückwärtigen Fahrraums in einem frei programmierbaren Kombiinstrument durchzuführen. Da ein solches frei programmierbares Kombiinstrument in der Regel einen Bildschirm aufweist, kann die Anzeige des Bildes des rückwärtigen Fahrraums bei Bedarf in einem Teilbereich des Kombiinstrumentes erfolgen, so daß auf eine zusätzliche Anzeige im Fahrzeug verzichtet werden kann.

Außerdem ist es vorteilhaft, eine Vorrichtung zur Durchführung des Verfahrens zur Fahrwegvisualisierung auszuführen, die über eine zentrale Steuereinheit verfügt. Durch diese Steuereinheit kann die Anzeige und die Kamera, insbesondere die Helligkeit, die Schärfe sowie ein Aufnahmewinkel der Kamera koordiniert werden. Dabei ist es ferner vorteilhaft, daß die Steuereinheit mit einer Eingabe verbunden ist, über die die Anzeige des möglichen Fahrweges bzw. des bei dem unveränderten Lenkwinkel zu erwartenden Fahrweges deaktiviert werden kann, z.B. wenn nur eine Beobachtung des rückwärtigen Fahrraumes bei stehendem Fahrzeug ohne Fahrabsicht gewünscht ist.

### Zeichnung

Ausführungsbeispiele der Erfindung sind in der Zeichnung dargestellt und in der nachfolgenden Beschreibung näher erläutert. Es zeigen:
Figur 1 den Ablauf des erfindungsgemäßen Verfahrens,
Figur 2 ein Fahrzeug vor einem ausgewählten Hindernis, einer Garageneinfahrt,
Figur 3 eine erfindungsgemäße Darstellung des rückwärtigen Fahrraums bei gerader Fahrt auf die Garageneinfahrt,
Figur 4 eine erfindungsgemäße Darstellung des rückwärtigen Fahrraums mit der Garageneinfahrt und zusätzlicher Anzeige des maximal möglichen Bereiches des Fahrwegs bei gerader Einfahrt,
Figur 5 eine erfindungsgemäße Darstellung des rückwärtigen Fahrraums mit gekrümmtem Fahrweg auf die Garageneinfahrt,
Figur 6 eine Darstellung des rückwärtigen Fahrraums mit gekrümmtem Fahrweg auf die Garageneinfahrt und zusätzlicher Anzeige des maximal möglichen Bereichs des Fahrweges,
Figur 7 eine Darstellung des rückwärtigen Fahrraums mit gekrümmtem Fahrweg auf die Garageneinfahrt und zusätzlicher Anzeige des maximal möglichen Bereichs des Fahrweges, wobei eine direkte Einfahrt in die Garage nicht möglich ist.
Figur 8 eine Vorrichtung zur Durchführung des erfindungsgemäßen Verfahrens.

### Beschreibung des Ausführungsbeispiels

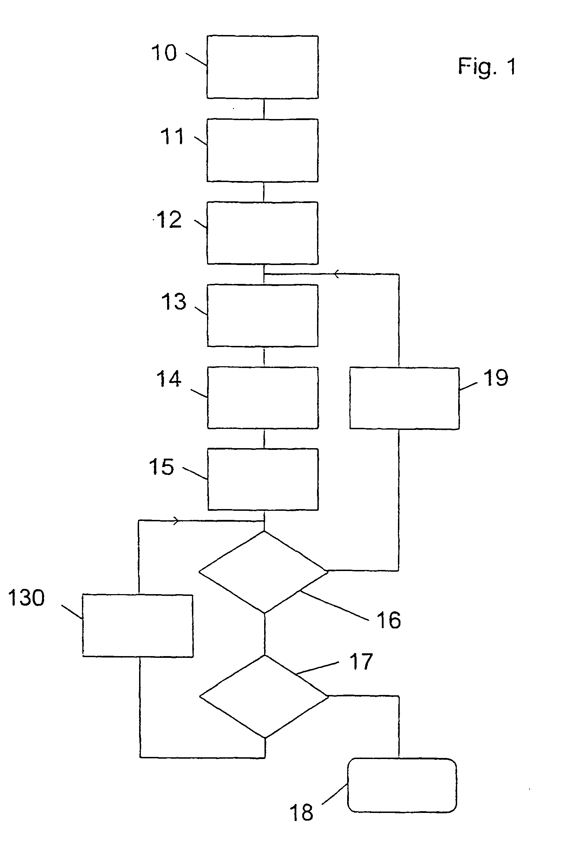

In der Figur 1 ist das erfindungsgemäße Verfahren zur Fahrwegvisualisierung dargestellt. Das Verfahren beginnt mit einem Aktivierungsschritt 10, wobei der Beginn des Verfahrens z.B. durch das Einlegen des Rückwärtsgangs automatisch oder auf manuelle Anforderung durch den Benutzer z.B. durch Tastendruck ausgelöst wird. Insbesondere wird eine Steuereinheit, die den Verfahrensablauf regelt, aktiviert.

In einem anschließenden Aktivierungsschritt der Bilderfassung 11 wird eine Kamera initialisiert, die der Überwachung des rückwärtigen Fahrraumes dient. Bis zu einem Ende des Verfahrensablaufs ermittelt die Kamera nun ein Bild des rückwärtigen Fahrraums des Fahrzeugs. Der Teil des rückwärtigen Fahrraums, der dabei von der Kamera erfaßt wird, ist durch die Kameraoptik begrenzt. In einem anschließenden Aktivierungsschritt der Entzerrung 12 wird in einer Recheneinheit, an die das von der Kamera erzeugte Bild weitergeleitet wird, eine rechnerische Entzerrung, der durch die Kameraoptik verursachten Bildverzerrung, durchgeführt. Unter Berücksichtigung der Daten der Kameraoptik werden nun die Randbereiche des erfaßten Bildes auf die Betrachtungsebene eines Bildschirmes projiziert, daß für den Fahrer, der den Bildschirm betrachtet, die Störung des Bildes durch die Verzerrung stark vermindert wird. Eine Kalibrierung der rechnerischen Entzerrung kann dabei derart erfolgen, daß ein Rechteckraster vor die Kamera gehalten wird und aus dem ausgegebenen Bild eine Transformationsfunktion für das Bild bestimmt wird, so daß bei einer Anwendung der Transformationsfunktion auf das Bild das Rechteckraster auch in der Anzeige erscheint. Diese Kalibrierung der rechnerischen Entzerrung kann bereits werksseitig erfolgen, wobei die Transformationsfunktion in der Recheneinheit gespeichert wird. Von dem Aktivierungsschritt der Entzerrung 12 bis zu dem Ende des Verfahrens wird eine Entzerrung des von der Kamera erfaßten Bildes kontinuierlich durchgeführt. In einem anderen, in der Zeichnung nicht dargestellten Ausführungsbeispiel des erfindungsgemäßen Verfahrens ist dabei das oben und im weiteren beschriebene Verfahren auch ohne den Aktivierungsschritt der Entzerrung 12 möglich. Einerseits erfolgt dann keine Bildentzerrung, der Rechenaufwand jedoch kann andererseits reduziert werden, da der Rechenaufwand für die rechnerische Entzerrung entfällt.

In einem ersten Abfrageschritt des Lenkwinkels 13 wird der aktuell bei dem Fahrzeug eingeschlagene Lenkwinkel durch die Steuereinheit abgefragt. Vorzugsweise geschieht dies über einen Lenkwinkelsensor, der im Bereich der Lenksäule oder der Lenkachse des Fahrzeugs angeordnet ist. Über eine insbesondere elektrische Datenverbindung wird der aktuelle Lenkwinkel der Steuereinheit übermittelt, wobei die Datenverbindung bevorzugt eine standardisierte Datenverbindung, wie z.B. ein CAN-Bus ist. In einem anschließenden Berechnungsschritt 14 wird aus dem ermittelten Lenkwinkel berechnet, wie sich der bei unverändertem Lenkwinkel verlaufende Fahrweg des Fahrzeuges verhält, indem z.B. der Fahrweg rechnerisch in die Fahrebene des Fahrzeugs projiziert wird. Außerdem wird der maximale Bereich berechnet, in den das Fahrzeug von seiner momentanen Position bei maximalem Einschlag nach links und nach rechts fahren kann. In einem anschließenden Anzeigeschritt 15 wird sowohl der zu erwartende Fahrweg bei unverändertem Lenkwinkel, als auch der mögliche Bereich, in dem das Fahrzeug fahren kann, in die Anzeige des rückwärtigen Fahrraumes projiziert, wobei der Fahrer die Anzeige einsehen kann. Erfolgt die Anzeige des rückwärtigen Fahrraumes in einem frei programmierbaren Kombiinstrument, so erfolgt die Einblendung der Anzeige in dem Bildschirm des frei programmierbaren Kombiinstruments. In einem anschließenden ersten Entscheidungsschritt 16 wird überprüft, ob sich der in dem ersten Abfrageschritt des Lenkwinkels 13 ermittelte Lenkwinkel gegenüber einem gespeicherten Wert geändert hat. Wird der erste Entscheidungsschritt 16 nach dem Aktivierungsschritt 10 das erste Mal erreicht, so ist in dem Speicher ein während des Aktivierungsschritts 10 gespeicherter Lenkwinkel abgelegt, der außerhalb des einstellbaren Lenkwinkels des Fahrzeuges liegt. Wird in dem ersten Aktivierungsschritt 16 festgestellt, daß der aktuell eingestellte Lenkwinkel über eine vorgegebene Toleranz hinaus von dem gespeicherten Wert abweicht, wird zu dem Speicherschritt 19 verzweigt. Die vorgegebene Toleranz wird dabei durch die Anzeigengenauigkeit für den erwarteten Fahrweg bzw. für den möglichen Bereich, in dem das Fahrzeug fahren kann, bestimmt. In dem Speicherschritt 19 wird der in dem ersten Abfrageschritt des Lenkwinkels 13 gemessene Lenkwinkel gespeichert. Danach wird wiederum zu dem ersten Abfrageschritt des Lenkwinkels 13 verzweigt. Wird in dem ersten Entscheidungsschritt 16 dagegen festgestellt, daß der in dem ersten Abfrageschritt des Lenkwinkels 13 gemessene Lenkwinkel innerhalb eines vorgegebenen Toleranzbereiches liegt, so wird zu dem zweiten Entscheidungsschritt 17 verzweigt. In dem zweiten Entscheidungsschritt 17 wird überprüft, ob der Rückwärtsgang noch eingelegt ist und ob der Motor noch eingeschaltet ist. Ist sowohl der Motor noch eingeschaltet, als auch der Rückwärtsgang noch eingelegt, so wird von dem zweiten Entscheidungsschritt 17 zu einem zweiten Abfrageschritt des Lenkwinkels 130 verzweigt. Ebenso wie in dem ersten Abfrageschritt des Lenkwinkels 13 wird hier der Lenkwinkel von dem Lenkwinkelsensor abgefragt. Danach wird zu dem ersten Entscheidungsschritt 16 weiterverzweigt. Ist dagegen in dem zweiten Entscheidungsschritt 17 festgestellt, daß entweder der Rückwärtsgang nicht eingelegt ist oder der Motor deaktiviert wurde, wird das Verfahren in einem Abschlußschritt 18 beendet, in dem u.a. die Stromzufuhr zu der Kamera beendet und eine Anzeige des rückwärtigen Fahrraumes abgeschaltet wird.

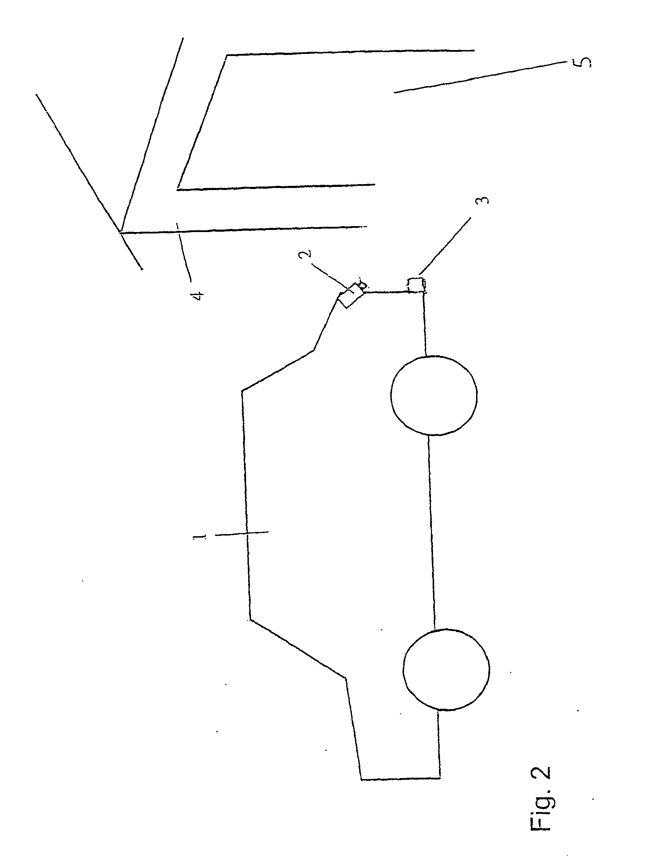

In der Figur 2 ist ein Fahrzeug 1 mit einer Kamera 2 dargestellt, wobei die Kamera 2 in einem hinteren Bereich des Fahrzeugs befestigt ist. Das Fahrzeug verfügt ferner über eine Fahrzeugstoßstange 3. Das Fahrzeug befindet sich vor einer Garage 4, die über eine Garageneinfahrt 5 verfügt. Das Fahrzeug 1 soll in die Garageneinfahrt 5 hineingefahren werden, ohne dabei die Wände der Garage 4 zu berühren. Hierzu wird der rückwärtige Fahrraum von der Kamera 2 überwacht. Die Kamera 2 kann dabei im allgemeinen nicht den gesamten, rückwärtigen Fahrraum überwachen, sondern sie erfaßt insbesondere einen Teil des rückwärtigen Fahrraums, der für den Fahrer wichtig ist, um die Fahrt in die Garage zu überwachen.

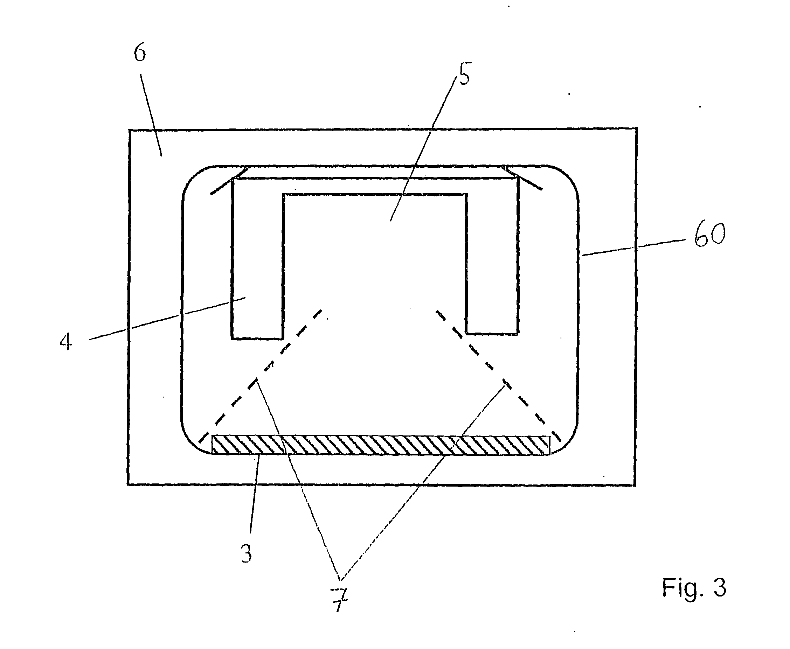

In der Figur 3 ist ein Teil des rückwärtigen Fahrraums dargestellt, wie er von der Kamera 2 erfaßt und anschließend nach dem erfindungsgemäßen Verfahren in einer Anzeige 6 dargestellt wird. Hier und im folgenden stellen gleiche Bezugszeichen auch gleiche Elemente dar. Die Anzeige 6 verfügt dabei z.B. über einen als eine Flüssigkristallanzeige ausgeführten Bildschirm 60, so daß die Treiberelektronik und die Spannungsversorgung sowie die Hinterleuchtung innerhalb der Anzeige 6 außerhalb der Bereiches des Bildschirmes 60 bzw. dahinter angeordnet ist. Auf dem Bildschirm 60 ist hier am unteren Bildrand zur Orientierung des Fahrers die Fahrzeugstoßstange 3 ersichtlich. Ferner ist die Garage 4 mit der Garageneinfahrt 5 dargestellt. Nach dem erfindungsgemäßen Verfahren wird der bei einem unveränderten Lenkwinkel zu erwartende Fahrweg des Fahrzeuges als ein erster zu erwartender Fahrweg 7 eingeblendet. Da der erste zu erwartende Fahrweg 7 gerade verläuft, ist offensichtlich die Lenkung des Fahrzeuges gerade eingestellt. Da der erste zu erwartende Fahrweg 7 in die Garageneinfahrt 5 hinein verläuft, ohne das Hindernis, die Wände der Garage 4, zu schneiden, kann der Fahrer nun ohne eine weitere Änderung des Lenkwinkels vorzunehmen, in die Garageneinfahrt 5 zurückstoßen.

Die Einblendung des ersten erwarteten Fahrweges 7 erfolgt, wie in der Figur 3 dargestellt, z.B. durch eine gestrichelte Linie, Eine Darstellung der gestrichelten Linie wird dabei an den Bildhintergrund, also das Bild des rückwärtigen Fahrraums, angepaßt. Bei Dunkelheit bis zu einer vorgebbaren Helligkeitsgrenze in der Anzeige erfolgt eine Einblendung von hellen, gestrichelten Linien. Bei Überschreitung der vorgebbaren Helligkeitsgrenze, z.B. bei Schnee, werden die gestrichelten Linien dunkel eingeblendet. Ebenfalls kann zur Darstellung auch eine durchgezogene Linie oder eine Linie aus Symbolen verwendet werden, z.B. aus Kreisen oder Rauten.

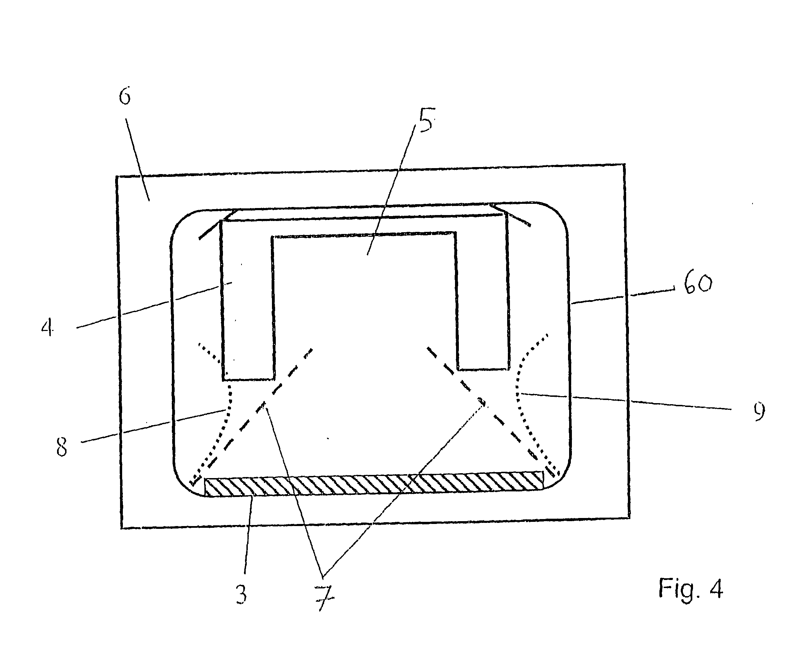

In der Figur 4 sind neben den zu der Figur 3 bereits erläuterten Elementen in dem Bildschirm 60 noch eine erste mögliche linke Begrenzung 8 sowie eine weitere, erste mögliche rechte Begrenzung 9 des maximal möglichen Fahrweges dargestellt. Aus dieser Darstellung kann der Fahrer u.a. entnehmen, daß es ihm nicht möglich sein wird, um die Garage 4 an der linken Seite aus Sicht der Darstellung in dem Bildschirm 60 vorbeizufahren, um z.B. das Fahrzeug neben der Garage abzustellen. Denn die erste mögliche linke Begrenzung 8 schneidet die Garage 4, so daß auch bei einem maximalen Einschlag der Lenkung nach links keine Möglichkeit für das Fahrzeug besteht, den Platz neben der Garage 4 zu erreichen. Der Fahrer muß in diesem Fall zunächst den Abstand des Fahrzeugs von der Garage 4 vergrößern, so daß es ihm möglich ist, den Platz neben der Garage 4 durch die Wahl eines geeigneten Fahrweges zu erreichen. Die Fahrt in die Garageneinfahrt 5 ist dagegen problemlos möglich.

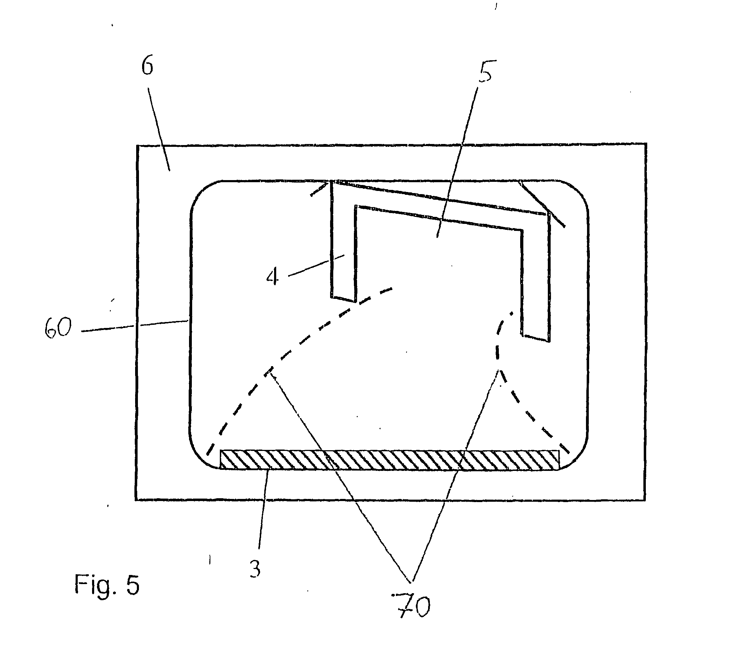

In der Figur 5 ist ebenfalls der rückwärtige Fahrraum des Fahrzeugs dargestellt. Gegenüber den Figuren 3 und 4 befindet sich das Fahrzeug nun offensichtlich in einer anderen Position gegenüber der Garage 4. Außerdem ist die Lenkung eingeschlagen, was aus dem gekrümmten Verlauf eines zweiten erwarteten Fahrweges 70 ersichtlich ist. Der zweite erwartete Fahrweg 70 führt allerdings ebenfalls, ohne die Garage 4 zu schneiden, in die Garageneinfahrt 5 hinein, so daß der Fahrer auch hier ohne eine Änderung des Lenkwinkels des Fahrzeugs in die Garageneinfahrt 5 fahren kann. Würde eine der beiden Begrenzungslinien des zweiten erwarteten Fahrweges 70 eine Seitenwand der Garage 4 schneiden oder gar außerhalb der Garage 4 verlaufen, so wäre der Fahrer dazu angehalten, den Lenkwinkel des Fahrzeuges solange zu korrigieren, bis der zweite erwartete Fahrweg 70 aus seiner Sicht innerhalb der Garageneinfahrt 5 verläuft, wodurch dann ein weiteres Hineinfahren in die Garageneinfahrt 5 ohne eine Korrektur des Lenkwinkels ermöglicht wird.

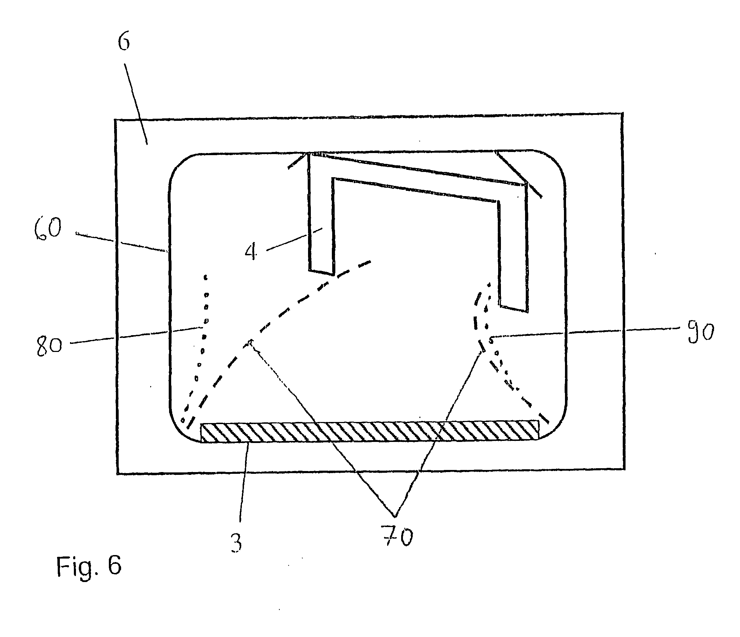

In der Figur 6 ist gegenüber der Figur 5 zusätzlich eine zweite mögliche linke Begrenzung 80 als auch eine zweite mögliche rechte Begrenzung 90 des maximal erreichbaren Fahrweges dargestellt. Es ist ersichtlich, daß der zweite erwartete Fahrweg 70 sehr nahe an der zweiten möglichen rechten Begrenzung 90 des maximal erreichbaren Fahrweges liegt, so daß der Fahrer hier seinen möglichen Spielraum bereits stark ausgenutzt hat.

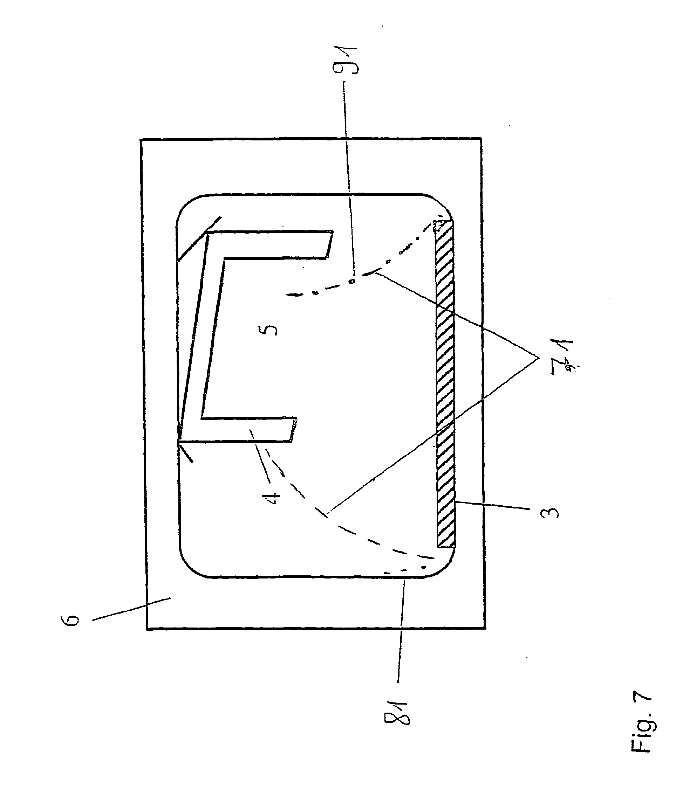

In der Figur 7 ist ein dritter erwarteter Fahrweg 71 sowie eine dritte mögliche linke Begrenzung 81 als auch eine dritte mögliche rechte Begrenzung 91 dargestellt. Der dritte erwartete Fahrweg 71 deckt sich mit der dritten möglichen rechten Begrenzung 91. Daher ist die gepunktete Linie für die dritte mögliche Begrenzung 91 deckungsgleich mit dem Rand des dritten erwarteten Fahrweges 71. Ein weiteres Lenken nach rechts ist für den Fahrer also nicht möglich. Dennoch liegt der dritte erwartete Fahrweg 71 auf einer Seite außerhalb der Garageneinfahrt 5. Ein direktes Zurücksetzen in die Garageneinfahrt 5 braucht der Fahrer also in diesem Fall erst gar nicht zu versuchen, da ein maximaler Einschlagwinkel bereits erreicht ist, ohne daß ein Einfahren in die Garage möglich ist. In diesem Fall muß der Fahrer erst vorfahren und mit größerem Abstand erneut beginnen, in die Garage hineinzufahren.

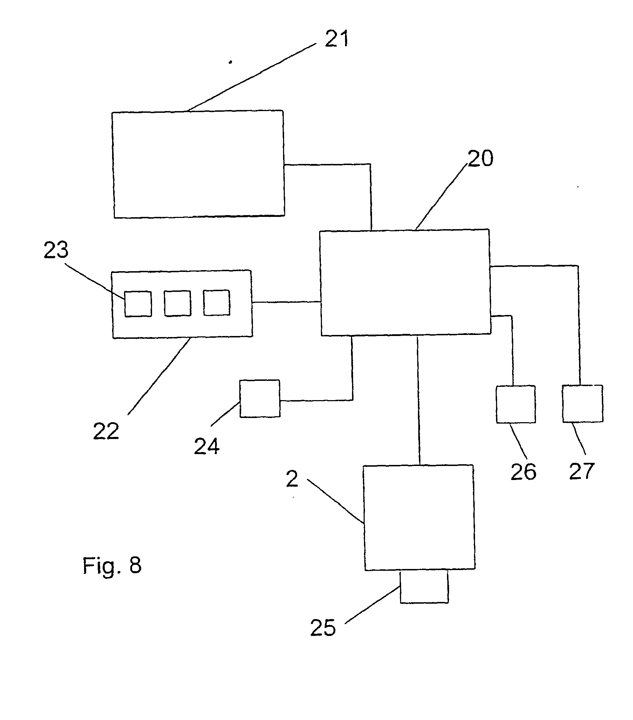

In der Figur 8 ist eine Vorrichtung zur Durchführung des erfindungsgemäßen Verfahrens dargestellt. Eine Steuereinheit 20 ist mit einer Anzeigeeinheit 21 verbunden. Ferner ist die Steuereinheit 20 mit einer Kamera 2 verbunden, die über eine Kameraoptik 25 verfügt. Außerdem verfügt die Steuereinheit 20 über eine Verbindung zu einem Lenkwinkelsensor 24, zu einer Eingabeeinheit 22 mit Tasten 23, zu einem Schaltungssensor 26 und einer Motorsteuerungseinheit 27. Die Steuereinheit 20 ist dabei vorzugsweise als eine digitale Recheneinheit mit einem Mikroprozessor und zumindest einer Speichereinheit ausgeführt. Die Steuereinheit 20 ist vorzugsweise im vorderen Bereich des Fahrzeugs angeordnet. Sie kann z.B. in eine zentrale Computereinheit des Fahrzeuges integriert sein. Die Anzeigeeinheit 21 ist vorzugsweise ein frei programmierbares Kombiinstrument. Insbesondere verfügt die Anzeigeeinheit 21 über ein Anzeige 6 mit einem Bildschirm 60, die in der Figur 8 nicht detailliert dargestellt sind. Die Anzeigeeinheit 21 kann jedoch auch eine zusätzliche, im vorderen Bereich des Fahrzeugs angeordnete und für den Fahrer einsehbare Anzeige sein, z.B. in der Mittelkonsole des Fahrzeugs. Die Eingabe 22 mit den Tasten 23 befindet sich ebenfalls in einem für den Fahrer gut zugänglichen Bereich, vorzugsweise an dem Armaturenbrett des Fahrzeugs. Mit den Tasten 23 ist somit eine selbständige Aktivierung der Beobachtung des rückwärtigen Fahrraumes, als auch eine Deaktivierung der Einblendung des zu erwartenden Fahrweges bzw. des maximal möglichen Bereiches, in dem der Fahrweg liegen kann, möglich. Sowohl auf den Lenkwinkelsensor 24, den Schaltungssensor 26 sowie die Motorsteuerung 27 greift die Steuereinheit 20 vorzugsweise über einen CAN-Bus zu. Der Lenkwinkelsensor 24 dient dabei, wie oben bereits erläutert, zur Erfassung des aktuellen Lenkwinkels. Der Schaltungssensor 26 liefert die Information, ob der Rückwärtsgang eingelegt ist. Die Motorsteuerung 27 liefert die Information, ob der Motor abgestellt wurde. Ebenso ist es hierzu auch möglich, eine Zündanlage des Fahrzeugs anzufragen. Die Kamera 2 verfügt über eine Kameraoptik 25, die vorzugsweise als eine Weitwinkeloptik ausgelegt ist. Durch eine Weitwinkeloptik kann ein möglichst großer Teil des rückwärtigen Fahrerraumes von der Kamera erfaßt werden. Eine Weitwinkeloptik verursacht jedoch eine Bildverzerrung, die durch eine anschließende Bildentzerrung in der Steuereinheit 20 ausgeglichen werden kann.

## Patentansprüche

1. Verfahren zur Fahrwegvisualisierung eines Fahrzeugs, insbesondere eines Kraftfahrzeuges, wobei in einem ersten Verfahrensschritt ein Bild zumindest eines Teiles des rückwärtigen Fahrraumes des Fahrzeugs erfaßt wird und wobei dieses Bild in einer Anzeige dargestellt wird, **dadurch gekennzeichnet, daß** in einem zweiten Verfahrensschritt ein bei einem unveränderten Lenkwinkel zu erwartender Fahrweg (7, 70, 71) des Fahrzeugs ermittelt und in einem dritten Verfahrensschritt in dem Bild der bei dem unveränderten Lenkwinkel zu erwartende Fahrweg des Fahrzeugs angezeigt wird.

2. Verfahren zur Fahrwegvisualisierung nach Anspruch 1, **dadurch gekennzeichnet, daß** der bei dem unveränderten Lenkwinkel zu erwartende Fahrweg des Fahrzeugs(7, 70, 71) aus einem eingeschlagenen Lenkwinkel einer Lenkung des Fahrzeugs ermittelt wird.

3. Verfahren zur Fahrwegvisualisierung nach einem der vorhergehenden Ansprüche, **dadurch gekennzeichnet, daß** der maximale Bereich (8, 9, 80, 90, 81, 91) angezeigt wird, in dem ein möglicher Fahrweg liegen kann.

4. Verfahren zur Fahrwegvisualisierung nach einem der vorhergehenden Ansprüche, **dadurch gekennzeichnet, daß** die Daten eines Lenkwinkelsensors (24) über einen CAN-Bus erfaßt werden.

5. Verfahren zur Fahrwegvisualisierung nach einem der vorhergehenden Ansprüche, **dadurch gekennzeichnet, daß** mit dem Teil des rückwärtigen Fahrraumes auch zumindest ein Teil der Fahrzeugstoßstange (3) erfaßt wird.

6. Verfahren zur Fahrwegvisualisierung nach einem der vorhergehenden Ansprüche, **dadurch gekennzeichnet, daß** die durch eine Kameraoptik (25) verursachte Verzerrung des ermittelten Bildes erfaßt wird und daß durch eine Recheneinheit eine Entzerrung des Bildes erfolgt.

7. Verfahren zur Fahrwegvisualisierung nach einem der vorhergehenden Ansprüche, **dadurch gekennzeichnet, daß** das Bild des rückwärtigen Fahrraumes durch eine Kamera (2) erfaßt wird, daß ein Ausgangssignal der Kamera (2) in Abhängigkeit von der Helligkeit ausgegeben wird und daß die Anhängigkeit durch eine nichtlineare, insbesondere durch eine logarithmische Wandelkennlinie vorgegeben wird.

8. Verfahren zur Fahrwegvisualisierung nach einem der vorhergehenden Ansprüche, **dadurch gekennzeichnet, daß** die Anzeige des Bildes des rückwärtigen Fahrraums in einem frei programmierbaren Kombiinstrument (21) erfolgt.

9. Vorrichtung zur Durchführung des Verfahrens nach einem der vorhergehenden Ansprüche, **dadurch gekennzeichnet, daß** in einem rückwärtigen Bereich eines Fahrzeugs eine Kamera (2) angeordnet ist, mit der zumindest ein Teil des rückwärtigen Fahrraumes des Fahrzeugs erfaßbar ist, daß in dem Fahrzeug (1) eine Anzeige (6, 21) angeordnet ist, die mit der Kamera (2) verbunden ist, daß in dem Fahrzeug ein Lenkwinkelsensor (24) zur Ermittlung des eingeschlagenen Lenkwinkels vorhanden ist und daß in der Anzeige (6, 21) ein bei dem unveränderten Lenkwinkel zu erwartender Fahrweg (7, 70, 71) des Fahrzeugs (1) anzeigbar ist.

10. Vorrichtung zur Durchführung des Verfahrens nach Anspruch 9, **dadurch gekennzeichnet, daß** die Vorrichtung über eine Steuereinheit (20) verfügt, die vorzugsweise als eine digitale Recheneinheit ausgeführt ist, und daß die Anzeige für den bei dem unveränderten Lenkwinkel zu erwartenden Fahrweg (7, 70, 71) und/oder für den Bereich, in dem der mögliche Fahrweg (8, 9, 80, 90, 81, 91) liegen kann, über die Steuereinheit (20) deaktivierbar ist.

## Claims

1. Method for visualizing a driving path of a vehicle, in particular of a motor vehicle, an image of at least part of the rear passenger compartment of the vehicle being sensed in a first method step and this image being displayed on a display, **characterized in that**, in a second method step, a driving path (7, 70, 71) of the vehicle which is to be expected if the steering angle is unchanged is determined, and in a third method step the driving path of the vehicle which is to be expected if the steering angle is unchanged is displayed in the image.

2. Method for visualizing a driving path according to Claim 1, **characterized in that** the driving path of the vehicle (7, 70, 71) which is to be expected if the steering angle is unchanged is determined from a steering lock angle of a steering system of the vehicle.

3. Method for visualizing a driving path according to one of the preceding claims, **characterized in that** the maximum range (8, 9, 80, 90, 81, 91) in which a possible driving path can lie is displayed.

4. Method for visualizing a driving path according to one of the preceding claims, **characterized in that** the data of a steering angle sensor (24) is acquired by means of a CAN bus.

5. Method for visualizing a driving path according to one of the preceding claims, **characterized in that** at least part of the bumper (3) of the vehicle is sensed together with the rear part of the passenger compartment.

6. Method for visualizing a driving path according to one of the preceding claims, **characterized in that** the distortion of the determined image which is caused by camera optics (25) is sensed, and **in that** the image is corrected by means of a computing unit.

7. Method for visualizing a driving path according to one of the preceding claims, **characterized in that** the image of the rear part of the passenger compartment is sensed by means of a camera (2), **in that** an output signal of the camera (2) is output as a function of the brightness, and **in that** the dependency is predefined by a nonlinear conversion characteristic, in particular by a logarithmic conversion characteristic.

8. Method for visualizing a driving path according to one of the preceding claims, **characterized in that** the image of the rear passenger compartment is displayed in a freely programmable combination instrument (21).

9. Device for carrying out the method according to one of the preceding claims, **characterized in that** a camera (2) with which at least part of the rear passenger compartment of the vehicle can be sensed is arranged in a rear region of a vehicle, **in that** a display (6, 21) which is connected to the camera (2) is arranged in the vehicle (1), **in that** a steering angle sensor (24) for determining the steering lock angle is provided in the vehicle, and **in that** a driving path (7, 70, 71) of the vehicle (1) which is to be expected if the steering angle is unchanged can be displayed on the display (6, 21).

10. Device for carrying out the method according to Claim 9, **characterized in that** the device has a control unit (20) which is preferably embodied as a digital computing unit, and **in that** the display for the driving path (7, 70, 71) which is to be expected if the steering angle is unchanged and/or for the range in which the possible driving path (8, 9, 80, 90, 81, 91) can lie can be deactivated by means of the control unit (20).

## Revendications

1. Procédé pour visualiser une voie de circulation d'un véhicule, notamment d'un véhicule automobile, selon lequel une image d'au moins une partie de la zone de circulation arrière du véhicule est détectée et reproduite dans une première étape de procédé et cette image étant reproduite sur un affichage,
**caractérisé en ce que**
dans une deuxième étape de procédé on calcule une voie de circulation attendue (7, 70, 71) du véhicule pour un angle de braquage inchangé et on affiche dans l'image la voie de circulation du véhicule attendue pour un angle de braquage inchangé dans une troisième étape de procédé.

2. Procédé pour visualiser une voie de circulation selon la revendication 1,
**caractérisé en ce qu'**
à partir d'un angle de braquage braqué à fond d'une direction du véhicule, on calcule la voie de circulation du véhicule (7, 70, 71) attendue pour l'angle de braquage inchangé

3. Procédé pour visualiser une voie de circulation selon l'une quelconque des revendications précédentes,
**caractérisé en ce qu'**
on indique la plage maximale (8, 9, 80, 90, 81, 91) dans laquelle une voie de circulation possible peut se trouver.

4. Procédé pour visualiser une voie de circulation selon l'une quelconque des revendications précédentes,
**caractérisé en ce qu'**
on saisit les données d'un capteur d'angle de braquage (24) via un bus CAN.

5. Procédé pour visualiser une voie de circulation selon l'une quelconque des revendications précédentes,
**caractérisé en ce qu'**
au moins une partie du pare-chocs du véhicule (3)

6. Procédé pour visualiser une voie de circulation selon l'une quelconque des revendications précédentes,
**caractérisé en ce qu'**
on saisit la distorsion de l'image calculée, due à une optique de caméra (25), et une unité de calcul procède au redressement de l'image.

7. Procédé pour visualiser une voie de circulation selon l'une quelconque des revendications précédentes,
**caractérisé en ce qu'**
une caméra (2) saisit l'image de la zone de circulation arrière, la caméra (2) génère un signal de sortie en fonction de la luminosité, et cette dépendance est prédéterminée par une ligne caractéristique combinée non linéaire, notamment logarithmique.

8. Procédé pour visualiser une voie de circulation selon l'une quelconque des revendications précédentes,
**caractérisé en ce que**
l'affichage de l'image de la zone de circulation arrière se produit dans un instrument de bord (21) librement programmable.

9. Dispositif d'exécution du procédé selon l'une quelconque des revendications précédentes,
**caractérisé en ce qu'**
une caméra (2) placée dans une zone arrière d'un véhicule permet de saisir au moins une partie de la zone de circulation arrière du véhicule, un affichage (6, 21) disposé dans le véhicule (1) est relié à la caméra (2), un capteur d'angle de braquage (24) disponible dans le véhicule calcule l'angle de braquage braqué à fond, et une voie de circulation (7, 70, 71) du véhicule (1) attendue pour l'angle de braquage inchangé peut être affichée dans l'affichage (6, 21).

10. Dispositif d'exécution du procédé selon la revendication 9,
**caractérisé en ce que**
le dispositif est muni d'une unité de commande (20) réalisée de préférence sous la forme d'une unité de calcul numérique et l'affichage pour la voie de circulation (7, 70, 71) attendue pour l'angle de braquage inchangé et/ou pour la zone dans laquelle peut se trouver la voie de circulation possible (8, 9, 80, 90, 81, 91) peut être désactivé par l'unité de commande (20).
